# EUROPÄISCHE PATENTSCHRIFT

(11) **EP 2 987 679 B1**
(45) Veröffentlichungstag und Bekanntmachung des Hinweises auf die Patenterteilung: **09.10.2019**
(21) Anmeldenummer: 15179481.5
(22) Anmeldetag: 03.08.2015
(51) Int. Cl.: B60N 2/80

(54) **KOPFSTÜTZE FÜR EINEN FAHRZEUGSITZ**
HEADREST FOR A VEHICLE SEAT
REPOSE-TÊTE POUR UN SIÈGE DE VEHICULE

(30) Priorität: 18.08.2014 DE 102014216322
(43) Veröffentlichungstag der Anmeldung: 24.02.2016
(73) Patentinhaber: Ford Global Technologies, LLC, Dearborn, MI 48126 (US)
(72) Erfinder: Wagner, Uwe, 42929 Wermelskirchen (DE); Schauf, Carsten, 42799 Leichlingen (DE); Vas, Kilian, 50670 Köln (DE); Hari, Daniel, 50735 Köln (DE)
(74) Vertreter: Dörfler, Thomas

(56) Entgegenhaltungen:
- DE-A1- 10 227 526
- DE-A1-102012 207 280
- US-A1- 2010 259 087

## Beschreibung

Die vorliegende Erfindung betrifft eine Kopfstütze für einen Fahrzeugsitz nach dem Oberbegriff des Anspruchs 1 sowie einen Fahrzeugsitz nach dem Oberbegriff des Anspruchs 7.

Es ist bekannt, dass Kopfstützen, insbesondere an Rücksitzen bzw. einer Rücksitzbank eines Kraftfahrzeugs angebrachte Kopfstützen, den Einbau eines Kinderrückhaltesystems, zum Beispiel eines Kindersitzes, behindern können. Sofern die Kopfstütze in einem solchen Fall für den Einbau des Kindersitzes nicht entfernt wird, kann dies zu einem unsachgemäßem Gebrauch des Kindersitzes führen, bei dem die ordnungsgemäße Positionierung nicht mehr gewährleistet ist. Zudem können Kopfstützen an den Rücksitzen bekanntlich die Sicht eines Fahrers nach hinten erheblich einschränken. Aus diesen Gründen sind Kopfstützen entwickelt worden, die sich zwischen einer Gebrauchsstellung, in welcher die Kopfstütze den Kopf eines auf dem Fahrzeugsitz sitzenden Insassen nach hinten abstützen kann, und einer Nichtgebrauchsstellung, in der sie zum Beispiel in eine Richtung vor oder hinter eine Rückenlehne des Fahrzeugsitzes verschwenkt ist, umklappen lassen. Derartige aus dem Stand der Technik bekannte Kopfstützen weisen hierfür einen eigenen Mechanismus mit einer komplexen Kinematik auf.

Beispielsweise sind aus den Druckschriften DE 10 2012 207 280 A1, US 2010/0259087 A1 und DE 102 27 526 A1 Kopfstützen mit jeweils einem Polsterteil bekannt, das mittels Tragstangen an einer Rückenlehne eines Fahrzeugsitzes befestigt ist. Das Polsterteil ist an einer die Tragstangen miteinander verbindenden Querstrebe schwenkbeweglich aufgehängt, um es zwischen einer Gebrauchsstellung und einer Nichtgebrauchsstellung umklappen zu können. Sowohl die Tragstangen als auch die Querstrebe verlaufen außerhalb des Polsterteils.

Ferner ist aus der DE 100 38 813 A1 eine Kopfstütze mit einem Polsterteil bekannt, das mittels Tragstangen an einer Rückenlehne eines Fahrzeugsitzes befestigt ist und um eine Schwenkachse nach hinten in eine flache Nichtgebrauchsstellung klappbar gelagert ist. Die Schwenkachse befindet sich innerhalb des Polsterteils und greift dort in im Wesentlichen parallel zu den Tragstangen verlaufende Führungen im Polsterteil ein. Einen ganz ähnlichen Aufbau einer umklappbaren Kopfstütze offenbart die FR 2 962 949.

Des Weiteren beschreibt die DE 36 15 857 A1 eine Kopfstütze, die mittels in Führungen verschiebbarer Haltestangen an einer Rückenlehne befestigt ist. Die Kopfstütze ist zwischen eine Gebrauchsstellung und einer Nichtgebrauchsstellung, in der sie nicht sichtbehindernd ist, umklappbar. Die Haltestangen sind jeweils durch ein Gelenk unterteilt, das in der Gebrauchsstellung der Kopfstütze innerhalb der zugehörigen Führung liegt. Bei Nichtgebrauch der Kopfstütze lässt sich diese mit den Haltestangen soweit aus den Führungen herausziehen, bis die Gelenke frei liegen. Aus der DE 197 39 798 A1 ist eine vom Prinzip her ähnliche umklappbare Kopfstütze bekannt.

Vor diesem Hintergrund liegt der vorliegenden Erfindung die Aufgabe zugrunde, eine Kopfstütze für einen Fahrzeugsitz bereitzustellen, die komfortabel und sicher ist und darüber hinaus mit einfachen, wirksamen und kostengünstigen Mitteln eine Umklappfunktion zwischen einer Gebrauchsstellung und einer Nichtgebrauchsstellung bereitstellt. Außerdem soll die Kopfstütze einfach zu bedienen und universell einsetzbar sein. Ferner soll ein Fahrzeugsitz mit einer Kopfstütze bereitgestellt werden, der ebenfalls von einer optimierten Bedienbarkeit und einer universellen Einsetzbarkeit profitiert.

Diese Aufgabe wird durch eine Kopfstütze mit den Merkmalen des Anspruchs 1 sowie durch einen Fahrzeugsitz mit den Merkmalen des Anspruchs 7 gelöst. Weitere, besonders vorteilhafte Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß umfasst eine Kopfstütze für einen Fahrzeugsitz ein Polsterteil, Tragstangen zur Befestigung des Polsterteils an einer Rückenlehne des Fahrzeugsitzes und eine Einrichtung zum Umklappen des Polsterteils um eine Schwenkachse von einer Gebrauchsstellung, in der das Polsterteil mit einer Vorderseite den Kopf einer auf dem Fahrzeugsitz sitzenden Person nach hinten abstützen kann, in eine Nichtgebrauchsstellung, in der das Polsterteil nach hinten in Schwenkachse von einer Gebrauchsstellung, in der das Polsterteil mit einer Vorderseite den Kopf einer auf dem Fahrzeugsitz sitzenden Person nach hinten abstützen kann, in eine Nichtgebrauchsstellung, in der das Polsterteil nach hinten in Richtung einer Rückseite der Rückenlehne des Fahrzeugsitzes verschwenkt ist. Als Vorderseite des Polsterteils ist hierbei jene Seite zu verstehen, die bei einem in das Fahrzeug eingebauten Zustand der Kopfstütze einer Front des Fahrzeugs zugewandt ist. Als Rückseite des Polsterteils bzw. der Rückenlehne ist dementsprechend jene Seite zu verstehen, die bei einem in das Fahrzeug eingebauten Zustand einem Heck des Fahrzeugs zugewandt ist.

Des Weiteren umfasst die Einrichtung zum Umklappen des Polsterteils um die Schwenkachse eine die Tragstangen miteinander verbindende, die Schwenkachse des Polsterteils bildende Querstrebe, die quer zur Längsrichtung der Tragstangen verläuft. Gemäß der vorliegenden Erfindung verlaufen die Tragstangen sowie die Querstrebe außerhalb des Polsterteils. Das Polsterteil ist von außen schwenkbeweglich an der Querstrebe aufgehängt.

Die erfindungsgemäße Ausgestaltung der Kopfstütze erlaubt einen äußerst einfachen und kostengünstigen Aufbau zur Realisierung der Umklappfunktion des Polsterteils, da das Polsterteil lediglich von außen schwenkbeweglich an der Querstrebe aufzuhängen ist. Die gesamte Mechanik der Umklappeinrichtung beschränkt sich dementsprechend auf die mit den Tragstangen verbundene Querstrebe sowie die schwenkbewegliche Aufhängung des Polsterteils. Aufgrund der einfachen Mechanik ist die erfindungsgemäße Kopfstütze zudem äußerst leicht zu bedienen, da das Polsterteil in einfachster Weise durch Verschwenken um die Querstrebe der Tragstangen zwischen der Gebrauchsstellung und der Nichtgebrauchsstellung umgeklappt werden kann. Da die Umklappeinrichtung der erfindungsgemäßen Kopfstütze nicht innerhalb des Polsterteils angebracht ist, kann das Polsterteil im Wesentlichen von der Verschwenkmechanik unbeschränkt gestaltet werden, so dass eine komfortable und sichere Abstützungsfunktion des Polsterteils in seiner Gebrauchsstellung gewährleistet werden kann. In seiner Nichtgebrauchsstellung, in der das Polsterteil nach hinten in Richtung einer Rückseite der Rückenlehne des Fahrzeugsitzes verschwenkt ist, behindert es der Einbau eines Kinderrückhaltesystems, zum Beispiel eines Kindersitzes, auf dem Fahrzeugsitz nicht. Zudem ist in der Nichtgebrauchtstellung der Kopfstütze die Sicht für einen Fahrer des Fahrzeugs nach hinten nicht durch das Polsterteil eingeschränkt.

Eine vorteilhafte Ausgestaltung der Erfindung sieht vor, dass die Tragstangen entlang einer Rückseite des Polsterteils verlaufen und sich das Polsterteil in seiner Gebrauchsstellung mit seiner Rückseite gegen die Tragstangen abstützt. Auf diese Weise ist eine sichere Positionierung des Polsterteils in seiner Gebrauchsstellung gegeben, ohne dass es einer aufwändigen Arretierungsmechanik für das Polsterteil bedürfte, was außerdem die Bedienbarkeit der Kopfstütze erheblich erleichtert.

Gemäß einer weiteren vorteilhaften Ausgestaltung der Erfindung sind an der Rückseite des Polsterteils den Tragstangen zugeordnete Ausnehmungen vorgesehen in denen die Tragstangen in der Gebrauchsstellung des Polsterteils verlaufen. Besonders bevorzugt sind die Ausnehmungen derart ausgebildet, dass die Tragstangen vollständig in diesen aufgenommen sind, wodurch sich der ästhetische Eindruck der Kopfstütze verbessern lässt, da die Tragstangen nicht aus der Kontur des Polsterteils an seiner Rückseite hervorstehen.

Eine weitere vorteilhafte Ausgestaltung der Erfindung sieht vor, dass die Ausnehmungen überdrückbare Arretierungen für die Tragstangen aufweisen. Somit kann das Polsterteil in seiner Gebrauchsstellung an den Tragstangen arretiert und gehalten werden. Bevorzugt lässt sich die überdrückbare Arretierung mit relativ geringer Handkraft überwinden, so dass die Bedienbarkeit der Kopfstütze hierdurch nicht beeinträchtigt wird. Die überdrückbare Arretierung kann beispielsweise durch eine einfache Verringerung der lichten Weite des Innendurchmessers der Ausnehmung in einem gewissen Längsabschnitt der Ausnehmung realisiert werden. Die Verringerung der lichten Weite der Ausnehmung wirkt auf die darin gehaltene Tragstange wie eine federnde Arretierung, deren Federkraft beim Einlegen der Tragstangen in die Ausnehmung sowie beim Herausnehmen vom Bediener der Kopfstütze von Hand zu überwinden ist.

Gemäß der Erfindung weist das Polsterteil eine parallel zur Querstrebe verlaufende, aus der Kontur des Polsterteils hervorstehende Haltestrebe auf. Hierbei ist eine Doppelklammer vorgesehen, die sowohl mit der Querstrebe als auch mit der Haltestrebe in einem schwenkbeweglichen Eingriff steht. Bevorzugt weisen die Querstrebe und die Haltestrebe einen runden Querschnitt auf, so dass die Doppelklammer, die zwei starr miteinander verbundene Klammerteile mit ebenfalls rundem Querschnitt umfasst, die auf die Querstrebe und die Haltestrebe drehbeweglich aufgeklemmt werden können, die schwenkbewegliche Verbindung zwischen dem Polsterteil und der Querstrebe herstellt.

Gemäß einer weiteren vorteilhaften Ausführungsform liegt die Haltestrebe an einer Oberseite des Polsterteils frei, wobei als Oberseite jene Seite des Polsterteils zu verstehen ist, die bei einem eingebauten Zustand im Fahrzeug einer Dachseite des Fahrzeugs zugewandt ist, wenn sich die Kopfstütze in ihrer Gebrauchsstellung befindet. Durch die Anordnung der Haltestrebe an der Oberseite des Polsterteils wird ein größtmöglicher Schwenkwinkelbereich für das Polsterteil erreicht, da das Polsterteil bei der Verschwenkung über einen großen Winkelbereich nicht mit den ortsfesten Tragstangen kollidiert.

Eine noch weitere vorteilhafte Ausgestaltung sieht vor, dass das Polsterteil um beispielsweise 270 Grad zwischen der Gebrauchsstellung und der Nichtgebrauchsstellung schwenkbar ist. Somit ist gewährleistet, dass das Polsterteil aus seiner im Wesentlichen senkrechten Lage der Gebrauchsstellung wenigstens in eine im Wesentlichen horizontale Lage der Nichtgebrauchsstellung hinter die Rückenlehne des Fahrzeugsitzes schwenkbar ist.

Gemäß einem weiteren Aspekt umfasst die Erfindung einen Fahrzeugsitz mit einer Rückenlehne und einer daran angeordneten Kopfstütze gemäß einer der vorstehend aufgeführten Ausgestaltungen. Durch die oben beschriebene Möglichkeit, die Kopfstütze in eine Nichtgebrauchsstellung zu überführen, kann ein verbessertes Bauvolumen des Fahrzeugsitzes erreicht werden. Insbesondere in der Nichtgebrauchsstellung der Kopfstütze zeigt sich der Fahrzeugsitz in einer insgesamt kompakteren Ausgestaltung, da die vertikale Erstreckung der Kopfstütze in der Nichtgebrauchsstellung am geringsten ist, wodurch die Sicht für einen Fahrer des Fahrzeugs nach hinten am wenigsten eingeschränkt wird. Außerdem ermöglicht das Verschwenken der Kopfstütze in die Nichtgebrauchsstellung ein ungehindertes, sicheres Einbauen eines Kinderrückhaltesystems, zum Beispiel eines Kindersitzes, auf dem Fahrzeugsitz.

Eine vorteilhafte Ausgestaltung des erfindungsgemäßen Fahrzeugsitzes sieht vor, dass die Tragstangen in der Rückenlehne längsverschiebbar aufgenommen sind, das heißt die Kopfstütze relativ zur Rückenlehne höhenverstellbar ist. Dies erleichtert u. a. die Bedienbarkeit bei der Verschwenkung des Polsterteils der Kopfstütze.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigen schematisch:
- Fig. 1: eine perspektivische Vorderansicht einer Ausführungsform einer erfindungsgemäßen Kopfstütze in einer Gebrauchsstellung,
- Fig. 2: eine perspektivische Seitenansicht der Kopfstütze aus Fig. 1,
- Fig. 3: eine perspektivische Seitenansicht der Kopfstütze aus Fig. 1 ohne Polsterteil,
- Fig. 4: eine weitere perspektivische Seitenansicht der Kopfstütze aus Fig. 1 ohne Polsterteil,
- Fig. 5: eine perspektivische Unteransicht der Kopfstütze aus Fig. 1 ohne Polsterteil und
- Fig. 6: eine Abfolge von sechs Betriebsstellungen der Kopfstütze aus Fig. 1 während des Verschwenkens des Polsterteils von einer Gebrauchsstellung in eine Nichtgebrauchsstellung.

In den unterschiedlichen Figuren sind hinsichtlich ihrer Funktion gleichwertige Teile stets mit denselben Bezugszeichen versehen, so dass diese in der Regel auch nur einmal beschrieben werden.

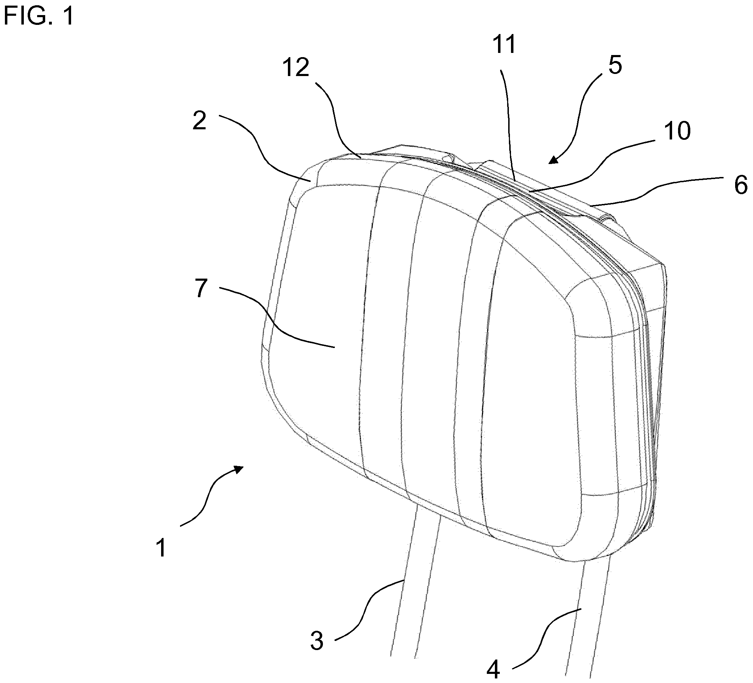

Fig. 1 stellt eine perspektivische Vorderansicht einer Ausführungsform einer erfindungsgemäßen Kopfstütze 1 für einen in Fig. 1 nicht dargestellten Fahrzeugsitz eines Kraftfahrzeugs in einer Gebrauchsstellung dar. Wie in Fig. 1 zu erkennen ist, umfasst die Kopfstütze 1 ein Polsterteil 2, ferner zwei Tragstangen 3 und 4 zur Befestigung des Polsterteils 2 an einer in Fig. 1 nicht dargestellten Rückenlehne des Fahrzeugsitzes und eine Einrichtung 5 zum Umklappen des Polsterteils 2 um eine Schwenkachse 6 von einer Gebrauchsstellung, in der das Polsterteil 2 mit einer Vorderseite 7 den Kopf einer auf dem Fahrzeugsitz sitzenden Person (nicht dargestellt) nach hinten abstützen kann, in eine Nichtgebrauchsstellung, in der das Polsterteil 2 nach hinten in Richtung einer Rückseite der Rückenlehne des Fahrzeugsitzes verschwenkt ist. Wie Fig. 1 weiter zu entnehmen ist, umfasst die Einrichtung 5 eine die Tragstangen 3 und 4 miteinander verbindende, die Schwenkachse 6 des Polsterteils 2 bildende Querstrebe 6.

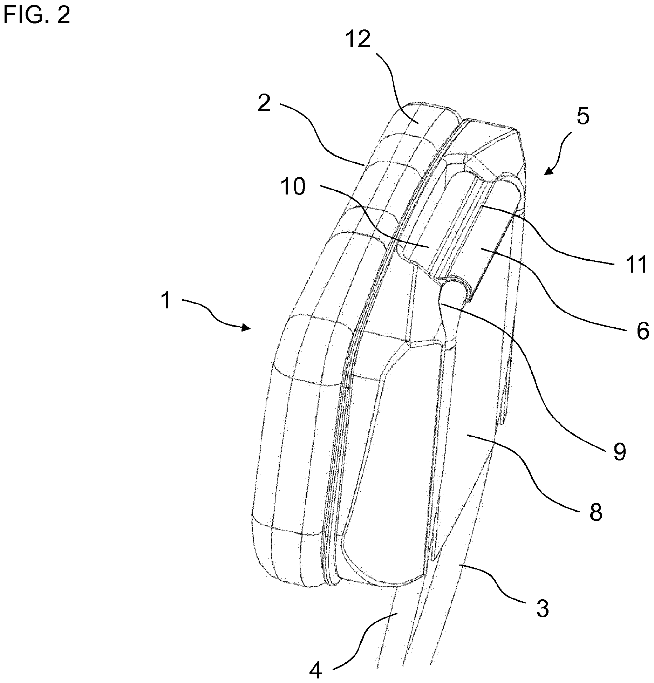

Bei dem in Fig. 1 dargestellten Ausführungsbeispiel verlaufen die Tragstangen 3 und 4 sowie die Querstrebe 6 außerhalb des Polsterteils 2 und das Polsterteil 2 ist mittels der Umklappeinrichtung 5 von außen schwenkbeweglich an der Querstrebe 6 aufgehängt. Deutlicher ist dies in Fig. 2 zu erkennen, die eine perspektivische Seitenansicht der Kopfstütze 1 aus Fig. 1 darstellt. Insbesondere verlaufen die Tragstangen 3 und 4 bei dem in Fig. 2 dargestellten Ausführungsbeispiel der Kopfstütze 1 entlang einer Rückseite 8 des Polsterteils 2. In der in Fig. 2 dargestellten Gebrauchsstellung der Kopfstütze 1 stützt sich das Polsterteil 2 zudem mit seiner Rückseite 8 gegen die Tragstangen 3 und 4 ab.

Darüber hinaus ist in Fig. 2 zu erkennen, dass an der Rückseite 8 des Polsterteils 2 den Tragstangen 3 und 4 zugeordnete Ausnehmungen 9 im Polsterteil 2 vorgesehen sind. Die Tragstangen 3 und 4 verlaufen in der Gebrauchsstellung des Polsterteils 2 jeweils in diesen Ausnehmungen 9. Insbesondere sind die Tragstangen 3 und 4, wie sich Fig. 2 entnehmen lässt, bei der in Fig. 2 gezeigten Kopfstütze 1 vollständig in den jeweiligen Ausnehmungen 9 aufgenommen, wodurch der ästhetische Eindruck der Kopfstütze 1 verbessert ist, da die Tragstangen 3 und 4 nicht aus der Kontur des Polsterteils 2 an seiner Rückseite 8 hervorstehen.

Bevorzugt weisen die Ausnehmungen 9 überdrückbare Arretierungen (nicht dargestellt) für die Tragstangen 3 und 4 auf. Somit kann das Polsterteil 2 in seiner Gebrauchsstellung an den Tragstangen 3 und 4 arretiert und gehalten werden.

Des Weiteren ist den Fig. 1 und 2 zu entnehmen, dass das Polsterteil 2 des gezeigten Ausführungsbeispiels der Kopfstütze 1 eine parallel zur Querstrebe 6 verlaufende, aus der Kontur des Polsterteils 2 hervorstehende Haltestrebe 10 aufweist. Die schwenkbewegliche Aufhängung des Polsterteils 2 an der Querstrebe 6 wird durch eine Doppelklammer 11 hergestellt, die sowohl mit der Querstrebe 6 als auch mit der Haltestrebe 10 in einem schwenkbeweglichen Eingriff steht.

Wie in den Fig. 1 und 2 zu erkennen ist, weisen die Querstrebe 6 und die Haltestrebe 10 der gezeigten Kopfstütze 1 einen runden Querschnitt auf, so dass die Doppelklammer 11, die zwei starr miteinander verbundene Klammerteile mit ebenfalls rundem Querschnitt umfasst, auf die Querstrebe 6 und die Haltestrebe 10 drehbeweglich aufgeklemmt werden kann. Ferner ist den Fig. 1 und 2 zu entnehmen, dass die Haltestrebe 11 der Kopfstütze 1 aus einer Oberseite 12 des Polsterteils 2 hervorsteht. Auf diese Weise ist das Polsterteil 2 um beispielsweise 270 Grad zwischen der Gebrauchsstellung und der Nichtgebrauchsstellung schwenkbar.

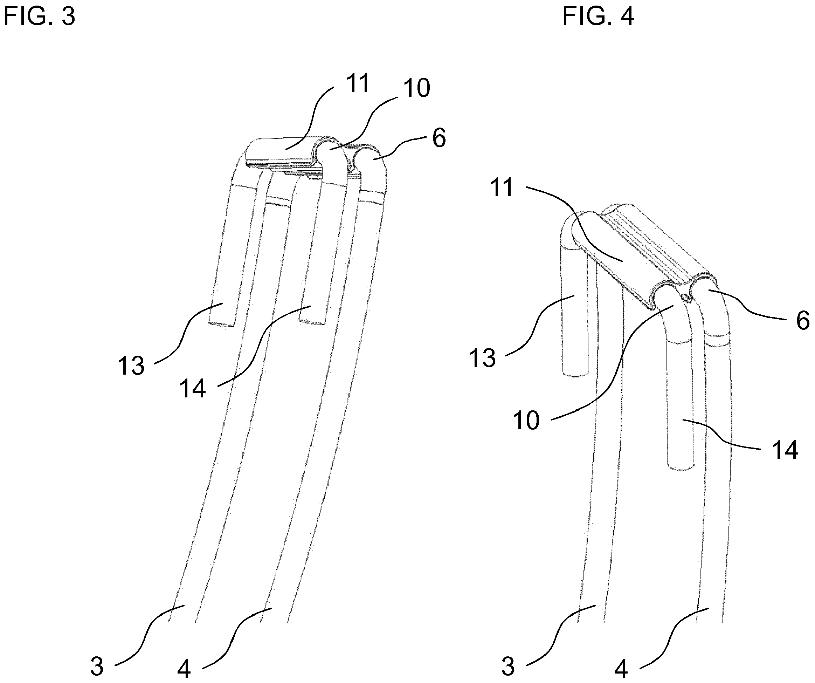

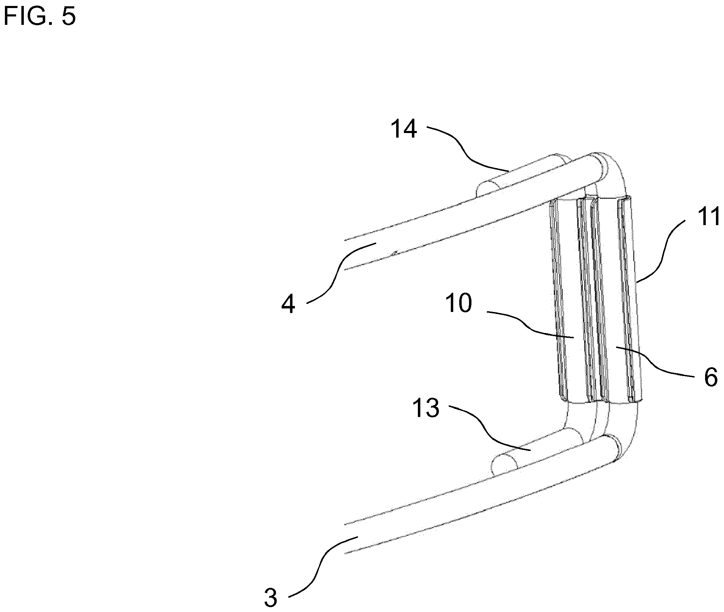

Die Fig. 3 und 4 stellen jeweils eine perspektivische Seitenansicht der Kopfstütze 1 aus Fig. 1 ohne Polsterteil 2 dar. Die Fig. 5 stellt eine perspektivische Unteransicht der Kopfstütze 1 aus Fig. 1 ohne Polsterteil 2 dar. In den Fig. 3, 4 und 5 sind die Tragstangen 3 und 4, die diese an einem oberen Ende der Tragstangen 3 und 4 miteinander verbindende Querstrebe 6, die Haltestrebe 10 sowie die die Haltestrebe 10 mit der Querstrebe 6 verbindende Doppelklammer 11 deutlicher zu sehen. Die Tragstangen 3 und 4 bilden zusammen mit der Querstrebe 6 eine U-Form. In ähnlicher Weise ist die Haltestrebe 10 mit zwei Haltestangen 13 und 14 verbunden, die zusammen ebenfalls eine U-Form bilden. Die Haltestangen 13 und 14 sind in dem in den Fig. 1 und 2 gezeigten Polsterteil 2 der Kopfstütze 1 zur Befestigung der Haltestrebe 10 an dem Polsterteil 2 eingelassen, so dass lediglich die Haltestrebe 10 aus der Oberseite 12 des Polsterteils 2 hervorsteht.

In der in Fig. 5 gezeigten Unteransicht ist zu erkennen, dass die beiden Klammerteile der Doppelklammer 11 nach unten hin geöffnet sind, um so in einfacher Weise auf die Haltestrebe 10 sowie die Querstrebe 6 aufgeklemmt werden zu können.

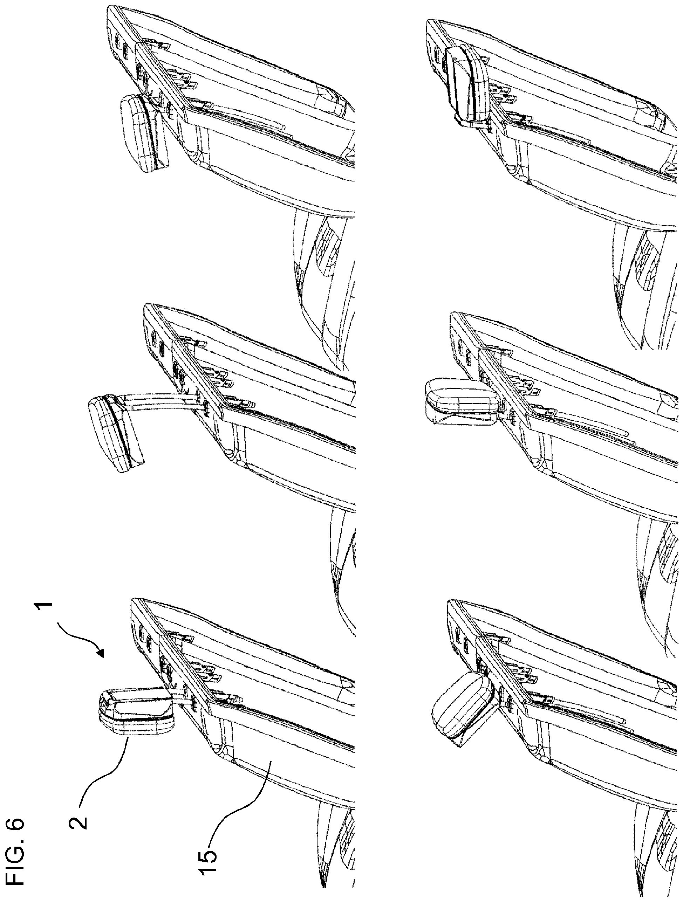

Fig. 6 stellt von oben links nach unten rechts eine Abfolge von sechs Betriebsstellungen der Kopfstütze 1 aus Fig. 1 während des Verschwenkens des Polsterteils 2 von einer Gebrauchsstellung in eine Nichtgebrauchsstellung an einer Rückenlehne 15 eines Fahrzeugsitzes dar. In der in Fig. 6 in der oberen Reihe links dargestellten Betriebsstellung befindet sich die Kopfstütze 1 in ihrer Gebrauchsstellung. In der in Fig. 6 in der unteren Reihe rechts dargestellten Betriebsstellung befindet sich die Kopfstütze 1 in ihrer Nichtgebrauchsstellung. Hierzu wird die Kopfstütze, wie in Fig. 6 gezeigt, um beispielsweise etwa 270 Grad um die durch die Querstrebe 6 gebildete Schwenkachse 6, sowie durch die Haltestrebe 10 gebildete Schwenkachse 10 verschwenkt. Wie Fig. 6 weiter zu entnehmen ist, sind die Tragstangen 3 und 4 in der Rückenlehne 15 längsverschiebbar aufgenommen, so dass die Kopfstütze 1 relativ zur Rückenlehne 15 höhenverstellbar ist. Insbesondere wird das Verschwenken des Polsterteils 2 der Kopfstütze 1 bevorzugt in seiner unteren, an die Oberseite der Rückenlehne 15 anliegenden Stellung durchgeführt, wie in der Darstellung der Fig. 6 in der oberen Reihe rechts und der unteren Reihe links und Mitte zu sehen ist, damit das Umklappen nicht zum Beispiel durch ein Dach des Fahrzeugs behindert wird.

Die erfindungsgemäße Kopfstütze sowie der erfindungsgemäße Fahrzeugsitz wurden anhand eines in den Figuren dargestellten Ausführungsbeispiels näher erläutert. Die Kopfstütze und der Fahrzeugsitz sind jedoch nicht auf die hierin beschriebene Ausführungsform beschränkt, sondern umfassen auch gleich wirkende weitere Ausführungsformen, sofern diese durch die Ansprüche gedeckt sind.

In bevorzugter Ausführung wird die erfindungsgemäße Kopfstütze in einem Fahrzeug, insbesondere einem Kraftfahrzeug, verwendet, wobei die Kopfstütze an einer Rückenlehne eines in dem Fahrzeug angebrachten Fahrzeugsitzes angeordnet ist.

### Bezugszeichenliste

- 1: Kopfstütze
- 2: Polsterteil
- 3: Tragstange
- 4: Tragstange
- 5: Einrichtung zum Umklappen von 2
- 6: Schwenkachse, Querstrebe
- 7: Vorderseite von 2
- 8: Rückseite von 2
- 9: Ausnehmung
- 10: Schwenkachse, Haltestrebe
- 11: Doppelklammer
- 12: Oberseite von 2
- 13: Haltestange
- 14: Haltestange
- 15: Rückenlehne

## Patentansprüche

1. Kopfstütze für einen Fahrzeugsitz, umfassend ein Polsterteil (2), Tragstangen (3, 4) zur Befestigung des Polsterteils (2) an einer Rückenlehne (15) des Fahrzeugsitzes und eine Einrichtung (5) zum Umklappen des Polsterteils (2) um eine Schwenkachse (6) von einer Gebrauchsstellung in eine Nichtgebrauchsstellung, wobei die Einrichtung (5) eine die Tragstangen (3, 4) miteinander verbindende, die Schwenkachse (6) des Polsterteils (2) bildende Querstrebe (6) umfasst und die Tragstangen (3, 4) sowie die Querstrebe (6) außerhalb des Polsterteils (2) verlaufen und das Polsterteil (2) von außen schwenkbeweglich an der Querstrebe (6) aufgehängt ist,
**dadurch gekennzeichnet, dass**
das Polsterteil (2) eine parallel zur Querstrebe (6) verlaufende, aus der Kontur des Polsterteils (2) hervorstehende Haltestrebe (10) aufweist, wobei eine Doppelklammer (11) vorgesehen ist, die sowohl mit der Querstrebe (6) als auch mit der Haltestrebe (10) in einem schwenkbeweglichen Eingriff steht.

2. Kopfstütze nach dem vorhergehenden Anspruch,
**dadurch gekennzeichnet, dass**
die Tragstangen (3, 4) entlang einer Rückseite (8) des Polsterteils (2) verlaufen und sich das Polsterteil (2) in seiner Gebrauchsstellung mit seiner Rückseite (8) gegen die Tragstangen (3, 4) abstützt.

3. Kopfstütze nach dem vorhergehenden Anspruch,
**dadurch gekennzeichnet, dass**
an der Rückseite (8) des Polsterteils (2) den Tragstangen (3, 4) zugeordnete Ausnehmungen (9) vorgesehen sind, in denen die Tragstangen (3, 4) in der Gebrauchsstellung des Polsterteils (2) verlaufen.

4. Kopfstütze nach dem vorhergehenden Anspruch,
**dadurch gekennzeichnet, dass**
die Ausnehmungen (9) überdrückbare Arretierungen für die Tragstangen (3, 4) aufweisen.

5. Kopfstütze nach einem der vorhergehenden Ansprüche,
**dadurch gekennzeichnet, dass**
die Haltestrebe (10) an einer Oberseite (12) des Polsterteils (2) freiliegt.

6. Kopfstütze nach einem der vorhergehenden Ansprüche,
**dadurch gekennzeichnet, dass**
das Polsterteil (2) um beispielsweise 270 Grad zwischen der Gebrauchsstellung und der Nichtgebrauchsstellung schwenkbar ist.

7. Fahrzeugsitz mit einer Rückenlehne (15) und einer daran angeordneten Kopfstütze (1),
**dadurch gekennzeichnet, dass**
die Kopfstütze (1) gemäß einem der vorhergehenden Ansprüche ausgebildet ist.

8. Fahrzeugsitz nach dem vorhergehenden Anspruch,
**dadurch gekennzeichnet, dass**
die Tragstangen (3, 4) in der Rückenlehne (15) längsverschiebbar aufgenommen sind.

## Claims

1. Headrest for a vehicle seat comprising a padded part (2), carrying bars (3, 4) for securing the padded part (2) to a backrest (15) of the vehicle seat and a mechanism (5) for turning down the padded part (2) about a swivel axis (6) from an in-use position into an out-of-use position, in which the mechanism (5) comprises a cross member (6) connecting the carrying bars (3, 4) to one another and forming the swivel axis (6) of the padded part (2) and the carrying bars (3, 4) and also the cross member (6) run outside the padded part (2) and the padded part (2) is suspended on the cross member (6) from the outside in a swiveling movable manner,
**characterized in that**
the padded part (2) has a retaining strut (10) running parallel to the cross member (6) projecting from the contour of the padded part (2), a double clip (11) being provided which is engaged both with the cross member (6) and also with the retaining strut (10) in a swiveling movable manner.

2. Headrest according to the preceding claim,
**characterized in that**
the carrying bars (3, 4) run along a rear side (8) of the padded part (2) and the padded part (2) rests in its in-use position with its rear side (8) against the carrying bars. (3, 4).

3. Headrest according to the preceding claim,
**characterized in that**
on the rear side (8) of the padded part (2) recesses (9) are provided which are assigned to the carrying bars (3, 4), in which recesses the carrying bars (3, 4) run in the in-use position of the padded part (2).

4. Headrest according to the preceding claim,
**characterized in that**
the recesses (9) display overpressable locking devices for the carrying bars (3, 4).

5. Headrest according to the preceding claim,
**characterized in that**
the retaining strut (10) is exposed on an upper side (12) of the padded part (2).

6. Headrest according to one of the preceding claims,
**characterized in that**
the padded part (2) can be swiveled about 270°, for example, between the in-use position and the out-of-use position.

7. Vehicle seat with a backrest (15) and a headrest (1) arranged thereon,
**characterized in that**
the headrest (1) is designed according to one of the preceding claims.

8. Vehicle seat according to the preceding claim,
**characterized in that**
the carrying bars (3, 4) are housed in the backrest (15) in a longitudinally displaceable manner.

## Revendications

1. Appui-tête pour un siège de véhicule, comprenant une partie de rembourrage (2), des barres de support (3, 4) pour la fixation de la partie de rembourrage (2) à un dossier (15) du siège de véhicule et un dispositif (5) pour rabattre la partie de rembourrage (2) autour d'un axe de pivotement (6) d'une position d'utilisation dans une position de non utilisation, le dispositif (5) comprenant une entretoise transversale (6) reliant l'une à l'autre les barres de support (3, 4), formant l'axe de pivotement (6) de la partie de rembourrage (2), et les barres de support (3, 4) ainsi que l'entretoise transversale (6) s'étendant à l'extérieur de la partie de rembourrage (2) et la partie de rembourrage (2) étant accrochée à l'entretoise transversale (6) de manière à pouvoir se déplacer par pivotement depuis l'extérieur,
**caractérisé en ce que**
la partie de rembourrage (2) présente une entretoise de retenue (10) s'étendant parallèlement à l'entretoise transversale (6), faisant saillie au-delà du contour de la partie de rembourrage (2), une double pince (11) étant prévue, laquelle est à la fois en prise avec l'entretoise transversale (6) et avec l'entretoise de retenue (10) de manière déplaçable par pivotement.

2. Appui-tête selon la revendication précédente,
**caractérisé en ce que**
les barres de support (3, 4) s'étendent le long d'un côté arrière (8) de la partie de rembourrage (2) et la partie de rembourrage (2) s'appuie dans sa position d'utilisation avec son côté arrière (8) contre les barres de support (3, 4).

3. Appui-tête selon la revendication précédente,
**caractérisé en ce que**
des évidements (9) associés aux barres de support (3, 4) sont prévus au niveau du côté arrière (8) de la partie de rembourrage (2), évidements dans lesquels s'étendent les barres de support (3, 4) dans la position d'utilisation de la partie de rembourrage (2).

4. Appui-tête selon la revendication précédente,
**caractérisé en ce que**
les évidements (9) présentent des arrêts pouvant être surmontés pour les barres de support (3, 4).

5. Appui-tête selon l'une quelconque des revendications précédentes,
**caractérisé en ce que**
l'entretoise de retenue (10) est exposée au niveau d'un côté supérieur (12) de la partie de rembourrage (2).

6. Appui-tête selon l'une quelconque des revendications précédentes,
**caractérisé en ce que**
la partie de rembourrage (2) peut pivoter par exemple de 270° entre la position d'utilisation et la position de non-utilisation.

7. Siège de véhicule comprenant un dossier (15) et un appui-tête (1) disposé sur celui-ci,
**caractérisé en ce que** l'appui-tête (1) est réalisé selon l'une quelconque des revendications précédentes.

8. Siège de véhicule selon la revendication précédente,
**caractérisé en ce que**
les barres de support (3, 4) sont reçues de manière déplaçable longitudinalement dans le dossier (15).
